# EUROPÄISCHE PATENTSCHRIFT

(11) **EP 3 363 569 B1**
(45) Veröffentlichungstag und Bekanntmachung des Hinweises auf die Patenterteilung: **13.12.2023**
(21) Anmeldenummer: 18155623.4
(22) Anmeldetag: 07.02.2018
(51) Int. Cl.: B23B 31/00, B23B 31/16, B65D 59/00, F16J 15/06, F16J 15/10

(54) **SPANN- ODER GREIFEINRICHTUNG**
CLAMPING OR GRIPPING DEVICE
DISPOSITIF DE SERRAGE OU DE PRÉHENSION

(30) Priorität: 21.02.2017 DE 102017103564
(43) Veröffentlichungstag der Anmeldung: 22.08.2018
(73) Patentinhaber: Schunk GmbH & Co. KG Spann- und Greiftechnik, 74348 Lauffen am Neckar (DE)
(72) Erfinder: Holstein, Alexander, 88515 Langenenslingen (DE); Siber, Mathias, 72517 Sigmaringendorf (DE)
(74) Vertreter: Paul & Albrecht Patentanwälte PartG mbB

(56) Entgegenhaltungen:
- EP-A1- 2 821 169
- EP-A1- 2 835 197
- CN-A- 101 927 357
- DE-A1- 4 239 907
- DE-A1- 19 915 042
- DE-A1-102007 030 883
- DE-U1- 9 400 117
- FR-A- 1 256 940
- JP-A- H0 355 102
- JP-U- S5 391 079
- JP-U- S5 473 577
- JP-U- H04 136 603
- JP-U- S59 156 712
- US-A- 2 538 521
- US-A1- 2004 206 173

## Beschreibung

Die Erfindung betrifft eine Spann- oder Greifeinrichtung mit einem eine Spannachse definierenden Grundkörper, der eine zentrale, zur vorderen Stirnfläche des Grundkörpers hin offene und den Grundkörper insbesondere durchsetzende axiale Aufnahmebohrung aufweist, wobei in der vorderen Stirnfläche des Grundkörpers mehrere Führungsnuten zur Aufnahme von Spannbacken ausgebildet sind, die sich radial zwischen der äußeren Umfangsfläche des Grundkörpers und der Aufnahmebohrung erstrecken und in der Weise ausgebildet sind, dass jeweils eine Spannbacke insbesondere von der Außenseite des Grundkörpers her radial in die Führungsnuten eingeschoben werden kann, wobei an dem Grundkörper Verbindungsmittel vorgesehen sind oder sein können, die an dem Grundkörper äußere Abdeckelemente lösbar fixieren, welche die Führungsnuten an deren offenen Außenseiten zumindest teilweise verschließen.

Derartige Spann- oder Greifeinrichtungen sind im Stand der Technik in unterschiedlichen Ausgestaltungen bekannt und dienen dazu, Werkstücke oder Werkzeuge an Maschinen zu fixieren. Beispielsweise werden sie an Werkzeugmaschinen, insbesondere an Drehmaschinen als Spannfutter für ein Werkzeug oder als Spannvorrichtung für ein Werkstück eingesetzt. Des Weiteren werden sie an Fräsmaschinen oder kombinierten Dreh-/Fräs-Bearbeitungszentren verwendet, um ein Werkzeug an einer Arbeitsspindel und/oder ein Werkstück an einem Maschinentisch der Fräsmaschine oder des kombinierten Dreh-/Fräs-Bearbeitungszentrums zu fixieren. Daneben werden solche Spann- oder Greifeinrichtungen als Greifer zu Automatisierungszwecken eingesetzt, um Bauteile während eines Transports sicher zu fixieren.

Herkömmliche Spann- oder Greifeinrichtungen umfassen einen formsteifen Grundkörper, der eine Spannachse für das Werkstück oder Werkzeug definiert und weist eine zentrale Aufnahmebohrung auf, die zu der vorderen Stirnfläche des Grundkörpers hin offen ist und den Grundkörper axial durchsetzt. In der vorderen Stirnfläche des Grundkörpers sind mehrere in der Umfangsrichtung gleichmäßig verteilte Führungsnuten ausgebildet, die sich radial zwischen der äußeren Umfangsfläche des Grundkörpers und der Aufnahmebohrung erstrecken. In jeder Führungsnut ist eine Spannbacke radial geführt gehalten. Die Spannbacken sind über gemeinsame Antriebsmittel in den Führungsnuten synchron verstellbar, um ein Werkstück oder Werkzeug zu spannen.

Um ein Eindringen von Fremdkörpern wie beispielsweise Spänen in die Führungsnuten und/oder ein Austreten von Schmiermittel aus den Führungsnuten zu verhindern, können die Führungsnuten an ihren offenen Außenseiten zumindest teilweise mit Abdeckelementen verschlossen sein. In diesem Fall sind die Abdeckelemente von außen an die Umfangsfläche des Grundkörpers gesetzt und mit diesem verschraubt.

Während des Betriebs der Spanneinrichtung- oder Greifeinrichtung sind die Spannbacken rotationsbedingt starken Zentrifugalkräften ausgesetzt. Infolgedessen kann eine Spannbacke, die sich fehlerhaft von den Antriebsmitteln löst, in der Führungsnut radial nach außen gegen das Abdeckelement geschleudert werden. Dadurch kann sich das mit dem Grundkörper verschraubte Abdeckelement lösen, so dass die lose Spannbacke aus der Spann- oder Greifeinrichtung geschleudert wird.

Aus der JP S53 91079 U ist eine Spanneinrichtung gemäß dem Oberbegriff des Anspruchs 1 in der Form eines Dreibackenfutters bekannt. Diese besitzt einen eine Spannachse definierenden Grundkörper, der eine zentrale, zur vorderen Stirnfläche des Grundkörpers hin offene und den Grundkörper durchsetzende axiale Aufnahmebohrung aufweist. Dabei sind in der vorderen Stirnfläche des Grundkörpers mehrere Führungsnuten zur Aufnahme von Spannbacken ausgebildet, die sich radial zwischen der äußeren Umfangsfläche des Grundkörpers und der Aufnahmebohrung erstrecken. Die Führungsnuten sind in der Weise ausgebildet, dass jeweils eine Spannbacke von der Außenseite des Grundkörpers her radial in die Führungsnuten eingeschoben werden können.

Auf die Spannbacken ist jeweils ein Aufsatz geschoben, welcher die zugehörige Führungsnut an ihrer Außenseite teilweise verschließt. Der Aufsatz wird an dem Grundkörper durch bügelartige, federnd vorgespannte Befestigungselemente fixiert, welche in eine seitlich Nut des Abdeckelements eingreifen und einen Haltezapfen an der vorderen Stirnfläche des Grundkörpers umgreifen.

Aus der US 2 538 521 A ist ferner eine Spanneinrichtung gemäß dem Oberbegriff des Anspruchs 10 bekannt, bei der die Führungsnuten einer Spanneinrichtung innenseitig durch eine Hülse verschlossen sind, um ein Eintreten von Staub oder Schmutz in die Führungsnuten von deren radialen Innenseite her zu verhindern. Die Hülse ist hier Teil eines Mantelelements, welches die Bauteile des Grundkörpers innen- und außenseitig umgreift und an der vorderen Stirnfläche des Grundkörpers anliegt.

Schließlich ist aus der EP 2 835 197 A1 bekannt, die Führungsnuten eines Spannfutters durch Dichtungskörper innenseitig zu verschließen. Diese sind in den Grundkörper von der vorderen Stirnfläche her unter Bildung einer Steckverbindung eingesetzt.

Ausgehend von diesem Stand der Technik ist es eine Aufgabe der vorliegenden Erfindung, eine Spann- oder Greifeinrichtung der eingangs genannten Art so auszugestalten, dass einem Eindringen von Fremdkörpern in die Führungsnuten und/oder ein Austreten von Fremdkörpern aus den Führungsnuten zuverlässig entgegengewirkt werden kann. Insbesondere soll verhindert werden, dass sich im Betrieb die äußeren Abdeckplatten, über welche die Führungsnuten außenseitig verschlossen werden, lösen.

Die Aufgabe wird erfindungsgemäß gemäß Anspruch 1 bei einer Spann- oder Greifeinrichtung der eingangs genannten Art zunächst dadurch gelöst, dass die grundkörperseitigen Verbindungsmittel Steckverbindungsmittel aufweisen, die derart ausgebildet sind, dass die äußeren Abdeckelemente mit ihnen unter Herstellung einer Steckverbindung, durch welche die Abdeckelemente an dem Grundkörper in radialer Richtung formschlüssig fixiert, von der Vorderseite oder der Rückseite des Grundkörpers her in Eingriff bringbar sind und dass äußere Abdeckelemente mit den grundkörperseitigen Steckverbindungsmitteln formschlüssig in Eingriff stehen und so an dem Grundkörper fixiert sind. Dabei können die Abdeckelemente zu den grundkörperseitigen Steckverbindungsmitteln korrespondierende Steckverbindungsmittel aufweisen.

Der Erfindung liegt somit die Überlegung zugrunde, die äußeren Abdeckelemente an dem Grundkörper in radialer Richtung formschlüssig zu fixieren. Dazu sind an dem Grundkörper Steckverbindungsmittel vorgesehen, mit denen die äußeren Abdeckelemente von der Vorderseite oder der Rückseite des Grundkörpers her in Eingriff gebracht werden können, um eine Steckverbindung zwischen dem Grundkörper und den Abdeckelementen herzustellen. Dank der Steckverbindung sind die äußeren Abdeckelemente in der radialen Richtung stabil festgelegt. Entsprechend halten die äußeren Abdeckelemente selbst einem Aufprall einer losen Spannbacke stand, so dass gewährleistet ist, dass die Führungsnuten außenseitig immer sicher verschlossen bleiben.

Gemäß einer Ausführungsform der Erfindung umfassen die grundkörperseitigen Steckverbindungsmittel an dem Grundkörper ausgebildete Einstecknuten, in welche die Abdeckelemente eingesteckt oder einsteckbar sind und die sich insbesondere U-förmig entlang des Umfangs der Führungsnuten erstrecken. In diesem Fall können die Abdeckelemente zu den Einstecknuten des Grundkörpers korrespondierende und mit diesen in Eingriff stehende Einsteckfedern aufweisen. Die Abdeckelemente können aber auch derart ausgebildet sein, dass ihre Randbereiche im eingesteckten Zustand unmittelbar mit den Einstecknuten in Eingriff stehen.

Alternativ oder zusätzlich umfassen die grundkörperseitigen Steckverbindungsmittel an dem Grundkörper ausgebildete Verbindungsstege, welche mit korrespondierenden Verbindungsnuten in den Abdeckelementen in Eingriff stehen oder bringbar sind und sich insbesondere U-förmig entlang des Umfangs der Führungsnuten erstrecken.

Vorteilhaft sind die Einsteckfedern/die Verbindungsnuten der Abdeckelemente korrespondierend zu den grundkörperseitigen Einstecknuten/den Verbindungsstegen U-förmig ausgebildet, so dass die Steckverbindungsmittel an dem Grundkörper einerseits und an den eingesteckten Abdeckelementen andererseits über ihre gesamte Länge in Eingriff stehen. Dadurch wird eine besonders sichere Verbindung zwischen dem Grundkörper und den Abdeckelementen erreicht. Zudem bewirken diese Steckverbindungsmittel, dass zwischen den eingesteckten Abdeckelementen und dem Grundkörper gebildete Spalte abgedichtet sind.

Bevorzugt sind die Abdeckelemente plattenförmig ausgebildet. In diesem Fall sind die zu den grundkörperseitigen Steckverbindungsmitteln korrespondierende Steckverbindungsmittel bevorzugt an oder in der äußeren Umfangsfläche der Abdeckelemente vorgesehen.

Gemäß einer vorteilhaften Weiterentwicklung ist jeder Führungsnut eine in der Umfangsfläche des Grundkörpers ausgebildete, zu der vorderen Stirnfläche des Grundkörpers hin offene Ausnehmung mit einer radialen Anlagefläche und einer die radiale Anlagefläche begrenzenden Randfläche zugeordnet, in die ein äußeres Abdeckelement einsteckbar oder eingesteckt ist. Bei entsprechender Dimensionierung stehen die in die Ausnehmungen eingesteckten äußeren Abdeckelemente nicht über die Umfangsfläche des Grundkörpers vor. Dabei können die grundkörperseitigen Steckverbindungsmittel in den Randflächen der Ausnehmungen ausgebildet sein.

Bevorzugt weisen die äußeren Abdeckelemente eine zu den Anlageflächen der Ausnehmungen korrespondierende Innenflächen auf, die mit den Anlageflächen der Ausnehmungen flächig in Kontakt kommen, wobei insbesondere die Anlageflächen und die Innenflächen eben ausgebildet sind.

In an sich bekannter Weise kann der Grundkörper im Wesentlichen zylinderförmig ausgebildet sein. In diesem Fall können die äußeren Abdeckelemente zylindermantelförmige Außenflächen aufweisen, die denselben Krümmungsradius wie die Umfangsfläche des Grundkörpers besitzen und mit der Umfangsfläche des Grundkörpers bündig abschließen.

Vorteilhaft umfassen die grundkörperseitigen Verbindungsmittel in dem Grundkörper ausgebildete Gewindebohrungen, die bevorzugt in den Anlageflächen der Ausnehmungen ausgebildet sind, und zu den Gewindebohrungen korrespondierende Schrauben, mittels derer die eingesteckten äußeren Abdeckelemente an dem Grundkörper axial festlegbar oder festgelegt sind.

Dazu sind an den äußeren Abdeckelementen bevorzugt korrespondierende Durchgangsbohrungen ausgebildet, die im montierten Zustand der äußeren Abdeckelemente von in die Gewindebohrungen eingeschraubten Schrauben durchgriffen werden. Auf diese Weise können die äußeren Abdeckelemente an dem Grundkörper zusätzlich festgeschraubt und so an einem axialen Auswandern aus dem Grundkörper gehindert werden. Zudem wird auf diese Weise eine Verstärkung der Verbindung zwischen den äußeren Abdeckelementen und dem Grundkörper erreicht.

Gemäß einem weiteren Aspekt der vorliegenden Erfindung, der unabhängig von der Anbringung von äußeren Abdeckelementen an dem Grundkörper und auch der Art von deren Befestigung ist, können gemäß Anspruch 10 an dem Grundkörper Verbindungsmittel vorgesehen sein, die an dem Grundkörper innere Abdeckelemente lösbar fixieren, welche die Führungsnuten an deren offenen Innenseiten zumindest teilweise verschließen und so einem Eindringen von Fremdkörpern aus der zentralen Aufnahmebohrung in die Führungsnuten und/oder ein Austreten von Schmiermittel aus den Führungsnuten in die zentrale Aufnahmebohrung entgegenwirken. Dazu können die Verbindungsmittel Steckverbindungsmittel aufweisen, die derart ausgebildet sind, dass die inneren Abdeckelemente unter Herstellung einer Steckverbindung von der Rückseite des Grundkörpers her mit ihnen in Eingriff bringbar sind, um sie an dem Grundkörper in radialer Richtung formschlüssig zu fixieren.

In bevorzugter Weise sind die inneren Abdeckelemente an einer Hülse gehalten oder ausgebildet, welche in die Aufnahmebohrung des Grundkörpers insbesondere von dessen Rückseite her eingeschoben und an dem Grundkörper fixiert ist.

Dabei ist erfindungsgemäß vorgesehen, dass an der Vorderseite der inneren Abdeckelemente jeweils eine Aussparung derart ausgebildet ist, dass sie von einem radialen Endbereich der Spannbacken durchgriffen wird oder werden kann und dass zwischen den Spannbacken einerseits und dem Grundkörper und/oder den inneren Abdeckelementen andererseits gebildete Spalte gegen ein Austreten von Schmiermittel aus den Führungsnuten und/oder gegen ein Eindringen von Fremdkörpern in die Führungsnuten abgedichtet sind, und dass die inneren Abdeckelemente in ihren die Aussparungen begrenzenden Randflächen eine U-förmige Einsetznut aufweisen, in die - insbesondere U-förmige - Dichtungselemente oder Dichtungsabschnitte eingesetzt sind, um an der Innenseite der Führungsnuten zwischen der Spannbacken einerseits und den Abdeckelementen andererseits gebildete Spalte abzudichten.

Gemäß einer Weiterentwicklung der Erfindung ist an der Vorderseite der äußeren Abdeckelemente jeweils eine Aussparung vorgesehen. Die Aussparungen sind derart ausgebildet, dass sie von einem radialen Endbereich einer in die zugehörige Führungsnut eingeschobenen Spannbacke durchgriffen werden oder werden können. Die Aussparungen bewirken, dass der radiale Verstellbereich der in die Führungsnuten eingeschobenen Spannbacken nicht durch die Abdeckelemente eingeschränkt wird. Dabei kann die Anordnung so getroffen sein, dass die Führungsnuten zur Vorderseite des Grundkörpers hin durch die Spannbacken verschlossen werden, so dass auch hier einem Eindringen von Schmutz beziehungsweise einem Austreten von Schmiermittel entgegengewirkt wird.

Vorteilhaft sind zwischen den in die Führungsnuten eingeschobenen Spannbacken einerseits und dem Grundkörper und/oder den eingesteckten äußeren Abdeckelementen andererseits gebildete Spalte gegen ein Austreten von Schmiermittel aus den Führungsnuten und/oder gegen ein Eindringen von Fremdkörpern in die Führungsnuten abgedichtet. Dies erhöht die Lebensdauer der Spann- oder Greifeinrichtung und gewährleistet einen zuverlässigen Betrieb. Dabei kann vorgesehen sein, dass dass die äußeren Abdeckelemente in ihren die Aussparungen begrenzenden Randflächen eine U-förmige Einsetznut aufweisen, in die - insbesondere U-förmige - Dichtungselemente oder Dichtungsabschnitte einsetzbar oder eingesetzt sind, um an der Außenseite und/oder an der Innenseite der Führungsnut zwischen der Spannbacke einerseits und den äußeren Abdeckelemente andererseits gebildete Spalte abzudichten.

Bevorzugt ist vorgesehen, dass in gegenüberliegenden Seitenwänden der Führungsnuten gerade Einsetznuten ausgebildet sind, die sich in der Längsrichtung der Führungsnuten erstrecken, wobei in die geraden Einsetznuten gerade Dichtungselemente oder Dichtungsabschnitte eingesetzt oder einsetzbar sind, um an der Vorderseite der Spann- oder Greifeinrichtung zwischen der Spannbacke und dem Grundkörper gebildete Spalte abzudichten.

Bevorzugt sind am Grund der Einsetznuten Vertiefungen und an den geraden Dichtelementen zu den Vertiefungen korrespondierende und mit diesen in Eingriff kommende Vorsprünge als Positionsmittel ausgebildet. Solche Positioniermittel erleichtern das Einsetzen der geraden Dichtelemente und halten die geraden Dichtelemente in ihrer Position, wenn die eingeschobene Spannbacke in der Führungsnut radial verstellt wird.

Ebenso können die Abdeckelemente in ihren die Aussparungen begrenzenden Randflächen eine U-förmige Einsetznut aufweisen, in die - insbesondere U-förmige - Dichtungselemente oder Dichtungsabschnitte einsetzbar oder eingesetzt sind, um an der Außenseite und/oder an der Innenseite der Führungsnut zwischen der Spannbacke einerseits und den Abdeckelementen andererseits gebildete Spalte abzudichten.

Bei einer bevorzugten Ausgestaltung der Erfindung erfolgt die Abdichtung durch Dichtungen mit zwei sich gegenüberliegenden geraden Dichtungsabschnitten und zwei U-förmigen Dichtungsabschnitten, welche zwischen den geraden Dichtungsabschnitten angeordnet sind und deren gegenüberliegende freie Enden miteinander verbinden, wobei die U-förmigen Dichtungsabschnitte gegenüber den graden Dichtungsabschnitten zu derselben Seiten hin insbesondere senkrecht abgewinkelt sind, und wobei die geraden Dichtungsabschnitte in die geraden Einsetznuten und die U-förmigen Dichtungsabschnitte in die in die U-förmigen Einsetznuten der Abdeckelemente eingesetzt sind.

Gemäß einer Weiterbildung dieser Ausführungsform sind die Übergangsbereiche zwischen den geraden Dichtelementen und den U-förmigen Dichtelementen abgerundet, wodurch deren Handhabung vereinfacht ist.

Weitere Merkmale und Vorteile der vorliegenden Erfindung werden anhand einer bevorzugten Ausführungsform der erfindungsgemäßen Spann- oder Greifeinrichtung unter Bezugnahme auf die beiliegende Zeichnung deutlich. Darin ist:
- Fig. 1: eine Vorderansicht einer Spann- oder Greifeinrichtung gemäß einer Ausführungsform der vorliegenden Erfindung mit eingeschobenen Spannbacken;
- Fig. 2: eine teilweise aufgeschnittene Querschnittsansicht der in Figur 1 dargestellten Spann- oder Greifeinrichtung entlang der mit II-II bezeichneten Linie;
- Fig. 3: eine teilweise aufgeschnittene Querschnittsansicht der in Fig. 1 dargestellten Spann- oder Greifeinrichtung entsprechend der in Figur 2 dargestellten Querschnittsansicht;
- Fig. 4: eine Seitenansicht der in Fig. 1 dargestellten Spannoder Greifeinrichtung;
- Fig. 5: eine perspektivische Ansicht des Grundkörpers der in Fig. 1 dargestellten Spann- oder Greifeinrichtung;
- Fig. 6: eine Vorderansicht des in Fig. 5 dargestellten Grundkörpers;
- Fig. 7: eine teilweise geschnittene Seitenansicht des in Fig. 5 dargestellten Grundkörpers;
- Fig. 8: eine teilweise geschnittene Seitenansicht des Grundkörpers;
- Fig. 9: eine perspektivische Ansicht eines Abdeckelementes der in Fig. 1 dargestellten Spann- oder Greifeinrichtung;
- Fig. 10: eine weitere perspektivische Ansicht des in Fig. 9 dargestellten Abdeckelements;
- Fig. 11: eine Seitenansicht des in Fig. 9 dargestellten Abdeckelements in radialer Richtung;
- Fig. 12: eine Querschnittsansicht des in Fig. 9 dargestellten Abdeckelements entlang der in Figur 11 mit XII-XII bezeichneten Linie;
- Fig. 13: eine Vorderansicht des in Fig. 9 dargestellten Abdeckelements in axialer Richtung;
- Fig. 14: eine Hülse, an welcher drei innere Abdeckelemente integral ausgebildet sind, in perspektivischer Ansicht von schräg unten;
- Fig. 15: die Hülse aus Figur 14 in perspektivischer Ansicht von schräg vorne;
- Fig. 16: die Hülse aus Figur 14 in einer Seitenansicht;
- Fig. 17: die Hülse aus Figur 14 in Vorderansicht;
- Fig. 18: die Hülse aus Figur 17 im Schnitt entlang der Linie A-A;

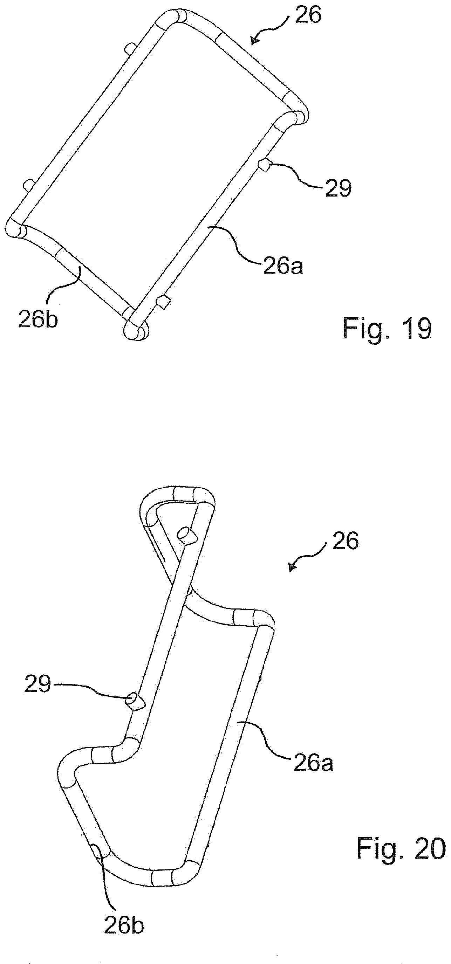

- Fig. 19: eine perspektivische Ansicht einer Dichtung der in Fig. 1 dargestellten Spann- und Greifeinrichtung;
- Fig. 20: eine weitere perspektivische Ansicht der in Fig. 19 dargestellten Dichtung;

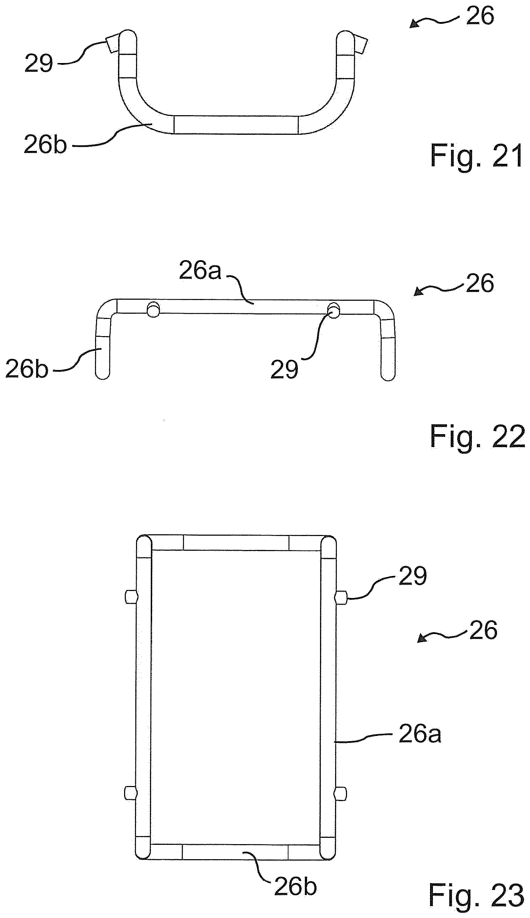

- Fig. 21: eine Seitenansicht der in Fig. 19 dargestellten Dichtung in radialer Richtung;
- Fig. 22: eine Seitenansicht der in Fig. 19 dargestellten Dichtung in Umfangsrichtung;
- Fig. 23: eine Draufsicht der in Fig. 19 dargestellten Dichtung in axialer Richtung; und
- Fig. 24: eine perspektivische Seitenansicht einer Spann- oder Greifeinrichtung gemäß einer weiteren Ausführungsform der Erfindung.

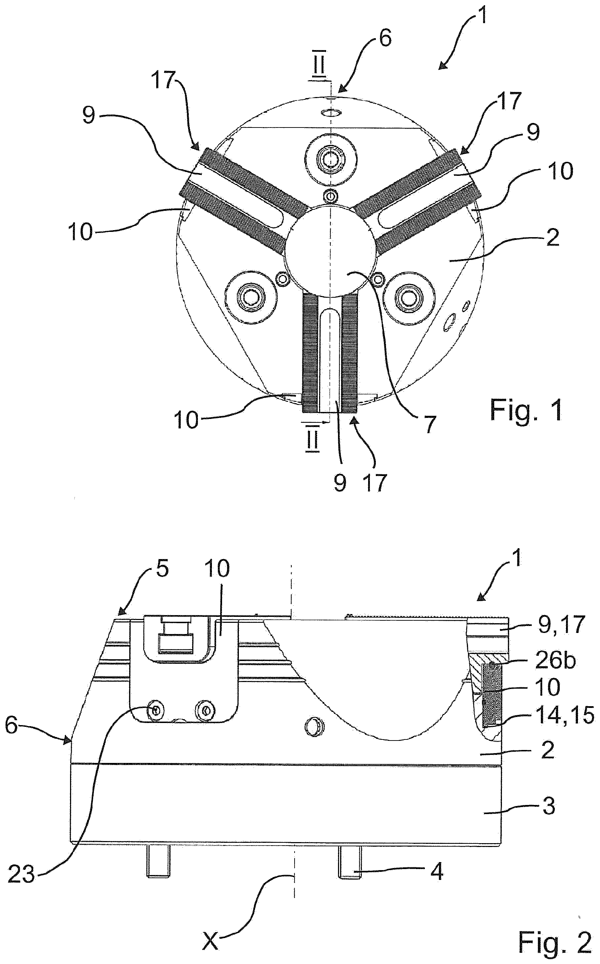

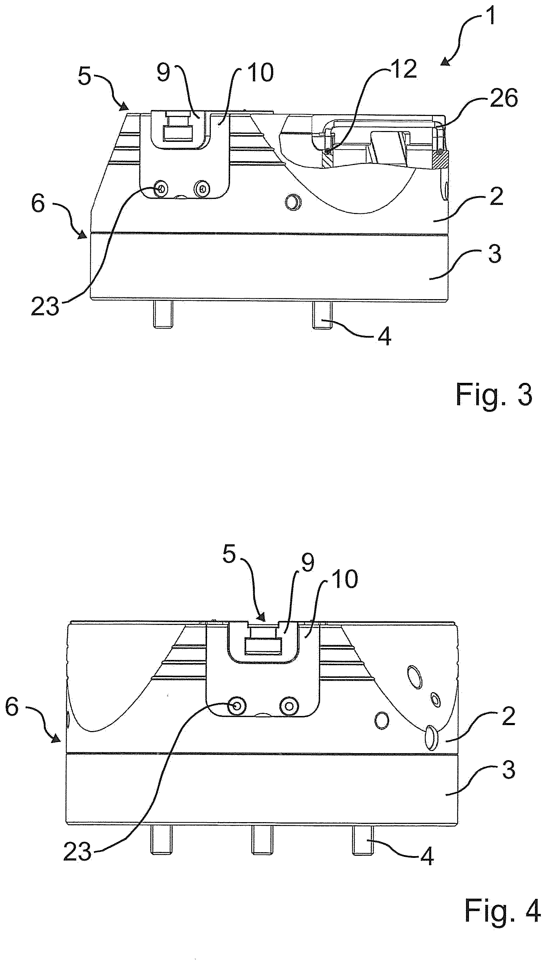

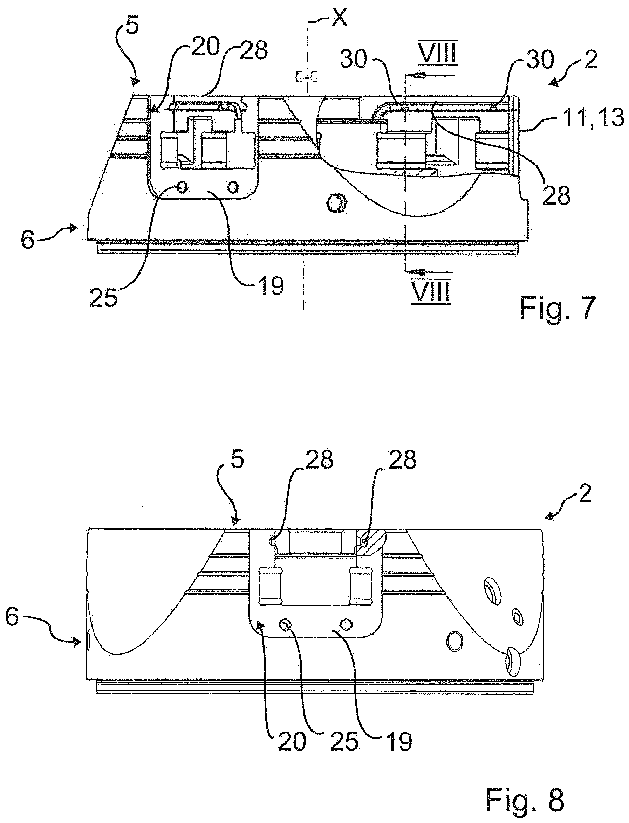

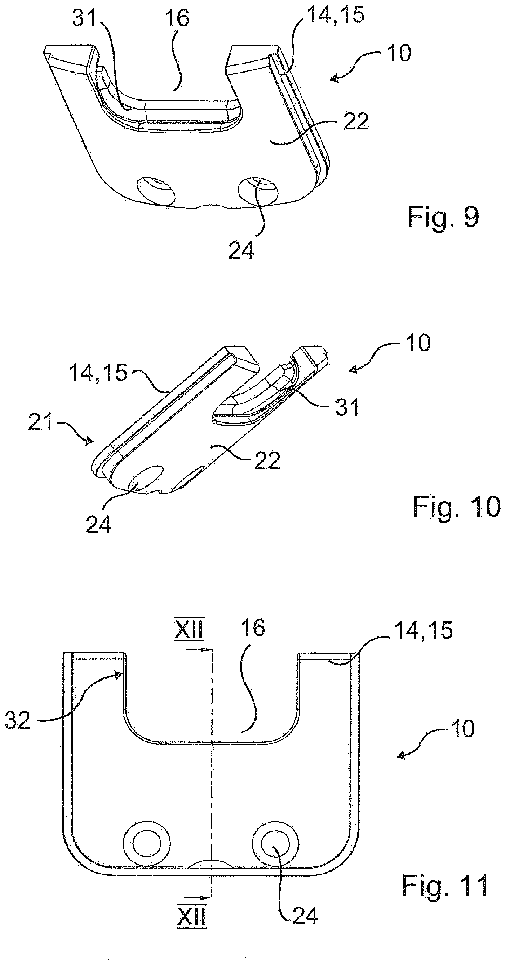

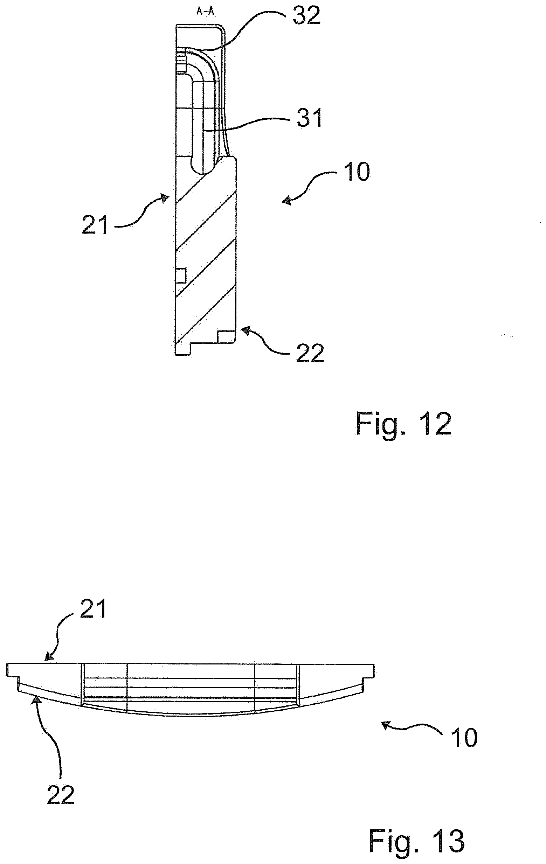

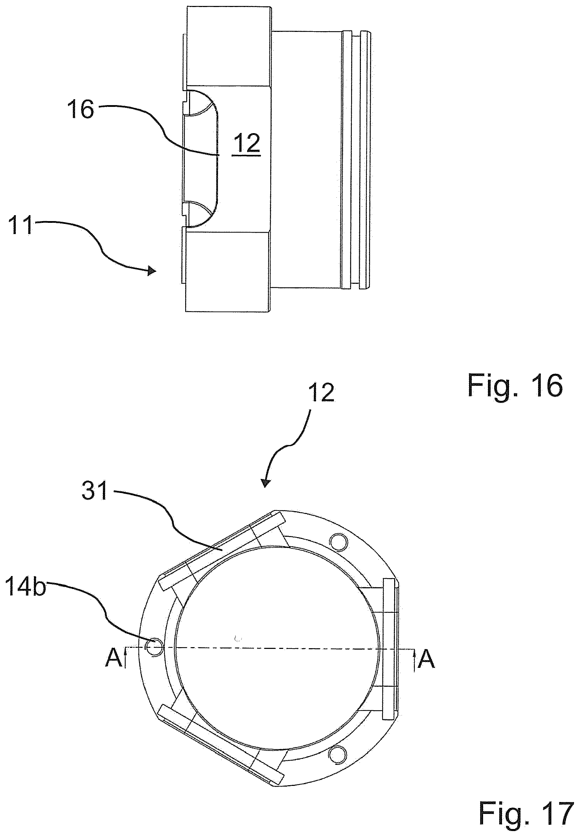

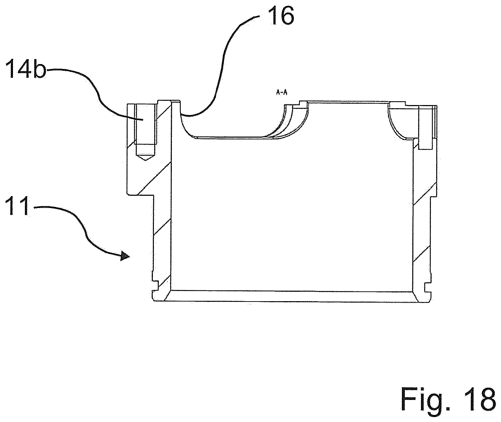

Die Figuren 1 bis 18 zeigen eine Spann- oder Greifeinrichtung 1 gemäß einer Ausführungsform der vorliegenden Erfindung, die vorliegend als Dreibackenspannfutter ausgebildet ist, mittels dessen ein Werkzeug an einer Arbeitsspindel einer nicht dargestellten Werkzeugmaschine fixiert werden kann. Wie aus den Figuren 1 bis 4 ersichtlich ist, umfasst die Spann- oder Greifeinrichtung 1 einen formsteifen Futter- oder Grundkörper 2, dessen offene Rückseite durch einen angeschraubten Befestigungsflansch 3 verschlossen ist. Der Futter- oder Grundkörper 2 und der Befestigungsflansch 3 sind von drei Bolzen 4 durchsetzt, die an der Arbeitsspindel der Werkzeugmaschine fixiert werden können.

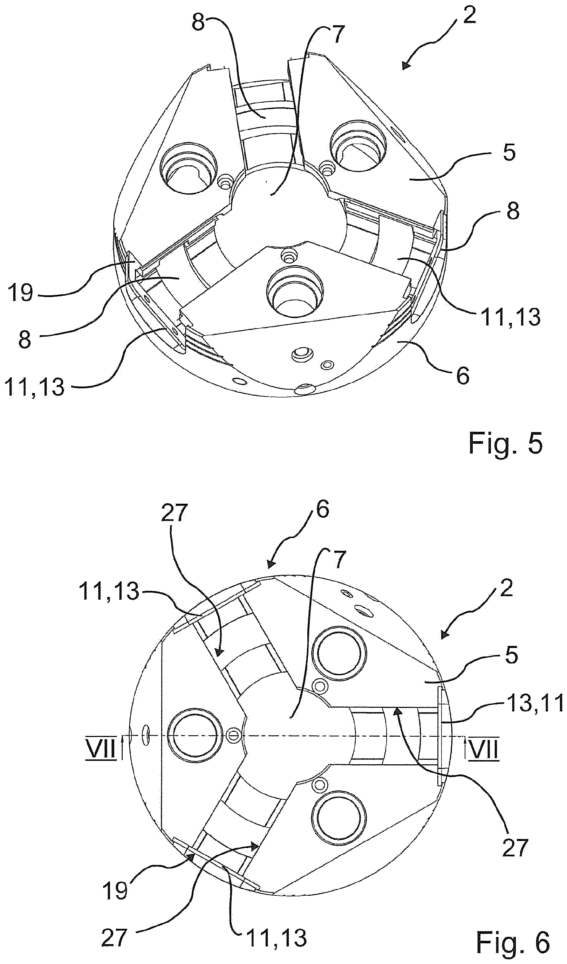

Der in den Figuren 5 bis 8 allein dargestellte Grundkörper 2 besitzt eine im Wesentlichen zylindermantelförmige Umfangsfläche 6 und definiert eine Spannachse X für ein zu spannendes Werkzeug. Er weist eine zentrale, zur vorderen Stirnfläche 5 des Grundkörpers 2 hin offene Aufnahmebohrung 7 auf, die den Grundkörper 2 axial durchsetzt. In der vorderen Stirnfläche 5 des Grundkörpers 2 sind drei Führungsnuten 8 ausgebildet, die sich radial zwischen der äußeren Umfangsfläche 6 des Grundkörpers 2 und der Aufnahmebohrung 7 erstrecken und in der Umfangsrichtung des Grundkörpers 2 gleichmäßig verteilt, d.h. mit 120° Versatz zueinander angeordnet sind. In die Führungsnuten 8 des Grundkörpers 2 sind Spannbacken 9 von der Außenseite des Grundkörpers 2 her radial eingeschoben.

Die Führungsnuten 8 sind an ihren offenen radialen Außenseiten durch drei äußere Abdeckelemente 10 und an ihren radialen Innenseiten durch drei innere Abdeckelemente 12 teilweise verschlossen.

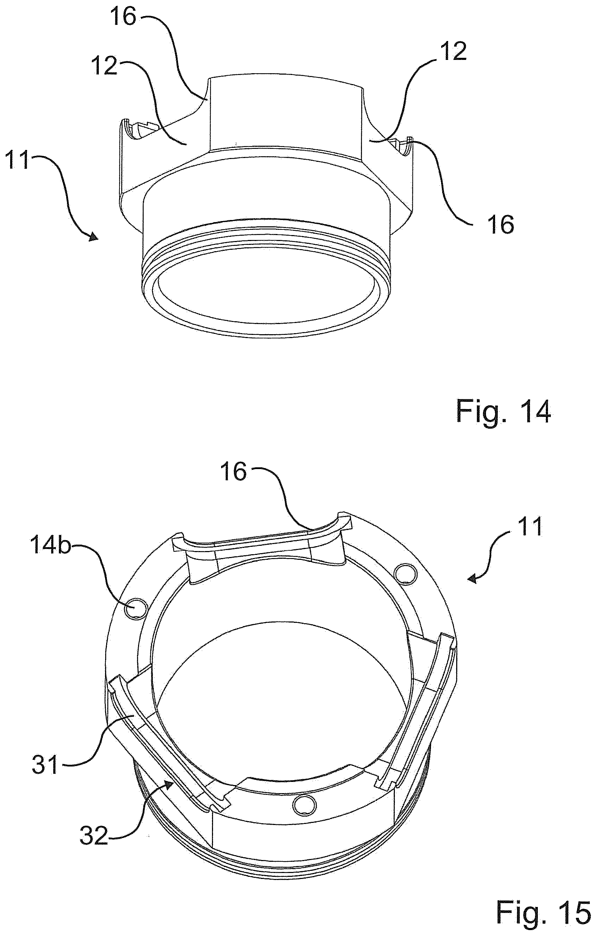

Die drei äußeren Abdeckelemente 10 sind plattenförmig ausgebildet und an dem Grundkörper 2 über eine Steckverbindung angebracht. Dazu sind an dem Grundkörper 2 Steckverbindungsmittel vorgesehen, mit denen die äu-βeren Abdeckelemente 10 von der Vorderseite des Grundkörpers 2 her in Eingriff gebracht sind. Die Steckverbindungsmittel sind derart ausgebildet, dass sie die äußeren Abdeckelemente 10 an dem Grundkörper 2 lösbar und in radialer Richtung formschlüssig fixieren. Die drei inneren Abdeckelemente 12 sind, wie insbesondere in den Figuren 14 bis 18 erkennbar ist, an einer Hülse 11 ausgebildet, welche in den Grundkörper 2 von dessen Rückseite her eingeschoben und an diesem festgeschraubt ist. Hierzu sind in der Vorderseite des Grundkörpers entsprechende Durchgangsbohrungen 14a und in einem vorderen Befestigungsflansch der Hülse 11 entsprechende Gewindebohrungen 14b ausgebildet.

Zur Aufnahme der drei äußeren Abdeckelemente 10 ist jeder Führungsnut eine in der äußeren Umfangsfläche 6 des Grundkörpers 2 ausgebildete und zu der vorderen Stirnfläche 5 des Grundkörpers 2 hin offene Ausnehmung 18 zugeordnet, in welche jeweils ein äußeres Abdeckelement 12 eingesetzt ist. Dabei bilden die Ausnehmungen 18 jeweils eine radiale Anlagefläche 19, an welcher die Innenfläche 21 eines in die Ausnehmung 18 eingesetzten äußeren Abdeckelements 10 flächig in Anlage kommt. In der dargestellten Ausführungsform sind die Innenflächen 21 der äußeren Abdeckelemente 10 und die Anlageflächen 19 der Ausnehmungen 18 korrespondierend zueinander eben ausgebildet. Die radialen Anlageflächen 19 werden seitlich von einer Randfläche 20 begrenzt, welche sich um die Führungsnut 8 U-förmig erstreckt.

Die Außenkonturen der äußeren Abdeckelemente 10 sind korrespondierend zu der Kontur der Ausnehmungen 18 so ausgebildet, dass zwischen der Randfläche 20 und den Abdeckelementen 10 keine oder nur minimale Spalte gebildet werden. Passend zu der zylindrischen Grundform des Grundkörpers 2 besitzen die äußeren Abdeckelemente 10 zylindermantelabschnittförmige Außenflächen 22, die denselben Krümmungsradius wie die Umfangsfläche 6 des Grundkörpers 2 haben und mit der Umfangsfläche 6 des Grundkörpers 2 bündig abschließen.

Zur Herstellung der Steckverbindung zwischen den äußeren Abdeckelementen 10 und dem Grundkörper 2 sind die grundkörperseitigen Steckverbindungsmittel in den Randflächen 20 der Ausnehmungen 18 in Form von Einstecknuten 13 ausgebildet, die sich über die gesamte Länge der Randflächen 20 erstecken und sich somit U-förmig um die Führungsnuten 8 erstrecken. An den äußeren Randflächen der äußeren Abdeckelemente 12 sind zu den Einstecknuten 13 korrespondierende Einsteckfedern 15 ausgebildet, die über ihre gesamte Länge mit den Einstecknuten 13 des Grundkörpers 2 in Eingriff stehen. Auf diese Weise wird eine stabile, formschlüssige Steckverbindung zwischen dem Grundkörper 2 und den äußeren Abdeckelementen 10 gebildet. Zudem werden zwischen dem Grundköper 2 und den äußeren Abdeckelementen 10 gebildete Spalte wirksam abgedichtet.

Die äußeren Abdeckelemente 10 sind in den Ausnehmungen 18 zusätzlich axial festgelegt, damit sie aus diesen nicht zu der Vorderseite des Grundkörpers 2 hin auswandern können. Dazu sind die äußeren Abdeckelemente 10 mittels Schrauben 23 an dem Grundkörper 2 fixiert, die an den äußeren Abdeckelementen 10 vorgesehene Durchgangsbohrungen 24 durchgreifen und in Gewindebohrungen 25 eingeschraubt sind, die im Bereich der Anlageflächen 19 der Ausnehmungen 18 in dem Grundkörper ausgebildet sind. Die Schraubverbindungen erhöhen die Widerstandskraft der äußeren Abdeckelemente 10 gegenüber radial wirkenden Kräften.

Zwischen den Spannbacken 9 einerseits und dem Grundkörper 2 bzw. den inneren und äußeren Abdeckelementen 10, 12 andererseits gebildete Spalte sind gegen ein Austreten von Schmiermittel aus den Führungsnuten 8 und gegen ein Eindringen von Fremdkörpern in die Führungsnuten 8 abgedichtet.

Hierzu sind Dichtungen 26 vorgesehen, die jeweils zwei sich gegenüberliegende gerade Dichtungsabschnitte 26a und zwei U-förmige Dichtungsabschnitte 26b, welche zwischen den geraden Dichtungsabschnitten 26a angeordnet sind und deren gegenüberliegende freie Enden miteinander verbinden, aufweisen. Dabei sind die U-förmigen Dichtungsabschnitte 26b gegenüber den geraden Dichtungselementen 26a senkrecht zu der Rückseite des Grundkörpers 2 hin abgewinkelt, wobei die Übergangsbereiche zwischen den geraden Dichtelementen 26a und den U-förmigen Dichtelementen 26b abgerundet ausgebildet sind.

In den gegenüberliegenden Seitenwänden 27 der Führungsnuten 8 sind Einsetznuten 28 ausgebildet, die sich in der Längsrichtung der Führungsnuten 8 erstrecken und in welche die geraden Dichtungsabschnitte 26a eingesetzt sind, um an der Vorderseite der Spann- oder Greifeinrichtung 1 zwischen den Spannbacken 9 und dem Grundkörper 2 gebildete Spalte abzudichten. Die geraden Dichtungsabschnitte 26a weisen Vorsprünge 29 auf, die mit korrespondierenden Vertiefungen 30 in Eingriff stehen, die am Grund der geraden Einsetznuten 28 vorgesehen sind, um die Dichtelemente 26 in den Einsetznuten 28 zu positionieren.

Die äußeren und inneren Abdeckelemente 10, 12 weisen U-förmige Einsetznuten 31 auf, die in den die Aussparungen 16 begrenzenden Randflächen 32 ausgebildet sind. In diese U-förmigen Einsetznuten 31 sind die U-förmigen Dichtungsabschnitte 26b der Dichtungen 26 eingesetzt, um an der Außenseite bzw. der Innenseite der Führungsnut 8 zwischen den Spannbacken 9 einerseits und den Abdeckelementen 10, 12 andererseits gebildete Spalte abzudichten.

Die erfindungsgemäße Spann- oder Greifvorrichtung 1 wird montiert, indem zunächst die Dichtungen 26 mit den zu der Rückseite des Grundkörpers 2 weisenden U-förmigen Dichtungsabschnitten 26b in den Führungsnuten 8 angeordnet und mittels der Vorsprünge 29 und der Vertiefungen 30 in den geraden Einsetznuten 28 positioniert werden. In einem weiteren Schritt wird die Hülse 11 mit den inneren Abdeckelementen 12 von der Rückseite her in den Grundkörper 2 eingesteckt und an diesem festgeschraubt, und die radial innen liegenden U-förmigen Dichtungsabschnitte 26b werden mit den U-förmigen Einsetznuten 31 der inneren Abdeckelemente 12 in Eingriff gebracht. Dann werden die radial äußeren U-förmigen Dichtungsabschnitte 26b der Dichtungen 26 zu der Vorderseite des Grundkörpers 2 gebogen und in dieser Position gehalten. Die Spannbacken 9 werden anschließend von der Außenseite des Grundkörpers 2 her in die Führungsnuten 8 eingeschoben, und die äußeren Abdeckelemente 10 werden von der Vorderseite des Grundkörpers 2 her in die Ausnehmungen 18 eingesteckt. Abschließend werden die radial äußeren U-förmigen Dichtungsabschnitte 26b in ihre ursprüngliche Position zurückgebogen und mit den U-förmigen Einsetznuten 31 der äußeren Abdeckelemente 10 in Eingriff gebracht.

Ein Vorteil der erfindungsgemäßen Spann- oder Greifeinrichtung 1 besteht darin, dass in die Führungsnuten 8 eingesetzte Spannbacken 9, die sich während des Betriebs aufgrund eines Fehlers von den Antriebsmitteln gelöst haben, durch die in den Ausnehmungen 18 radial festgelegten äußeren Abdeckelemente 10 während des Betriebs der Spann- oder Greifeinrichtung 1 daran gehindert werden, aus den Führungsnuten 8 hinausgeschleudert zu werden. Ein weiterer Vorteil ist darin zu sehen, dass dank der Abdeckelemente 10, 12 und der Dichtungen 26 Fremdkörper wie beispielsweise Späne daran gehindert werden, in die zwischen dem Grundkörper 2 und den Spannbacken 9 verbleibenden Spalte einzudringen. Infolgedessen können sich die Führungsnuten 8 nicht zusetzen, wodurch eine ordnungsgemäße Verstellbarkeit der Spannbacken 9 in den Führungsnuten 8 erhalten bleibt. Abgesehen davon kann mittels der Abdeckelemente 10, 12 und der Dichtungen 26 auch ein Austreten von Schmiermittel aus den Führungsnuten 8 vermieden werden.

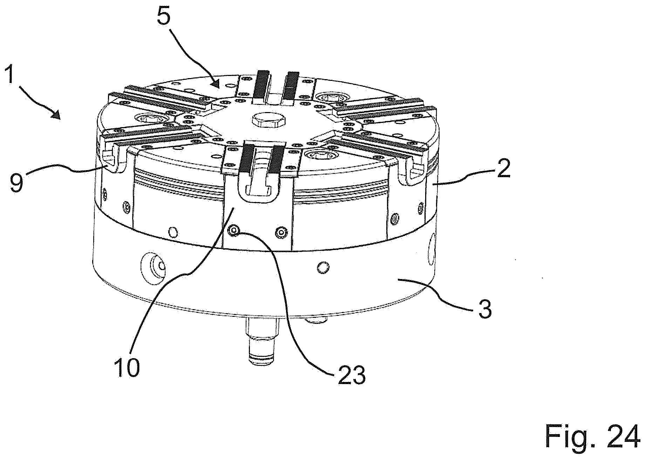

In der Figur 24 ist eine weitere Spann- oder Greifeinrichtung 1 gemäß der vorliegenden Erfindung dargestellt. Diese besitzt den gleichen Aufbau wie die zuvor erläuterte Spann- oder Greifeinrichtung. Der Unterschied besteht im Wesentlichen darin, dass die Spann- oder Greifeinrichtung 1 als Sechsbackenfutter ausgebildet ist. Entsprechend sind in der vorderen Stirnfläche 5 des Grundkörpers 2 insgesamt sechs Führungsnuten 8 ausgebildet, die sich in radialer Richtung von der äußeren Umfangsfläche des Grundkörpers 2 nach innen erstrecken und in der Umfangsrichtung des Grundkörpers 2 gleichmäßig verteilt, d.h. mit 60° Versatz zueinander angeordnet sind. In die Führungsnuten 8 des Grundkörpers 2 sind Spannbacken 9 von der Außenseite des Grundkörpers 2 her radial eingeschoben.

Die Führungsnuten 8 sind an ihren offenen radialen Außenseiten durch sechs äußere Abdeckelemente 10 teilweise verschlossen. Wie bei der ersten Ausführungsform sind die äußeren Abdeckelemente 10 plattenförmig ausgebildet und an dem Grundkörper 2 über eine Steckverbindung angebracht. Dazu sind an dem Grundkörper 2 Steckverbindungsmittel vorgesehen, mit denen die äußeren Abdeckelemente 10 in Eingriff gebracht sind, sodass die äußeren Abdeckelemente 10 an dem Grundkörper 2 lösbar, jedoch in radialer Richtung formschlüssig fixiert sind. Während bei der zuvor erläuterten Ausführungsform die Abdeckelemente 10 mit den grundkörperseitigen Steckverbindungsmitteln von der Vorderseite des Grundkörpers 2 her in Eingriff gebracht sind, ist bei der in Figur 24 dargestellten Ausführungsform die Ausgestaltung so getroffen, dass die Steckverbindung von der Rückseite des Grundkörpers 2 hergestellt wird, bevor der Befestigungsflansch 3 an dem Grundkörper 2 angebracht wird.

Im Übrigen korrespondiert die zweite Ausführungsform mit der ersten Ausführungsform.

### Bezugszeichenliste

- 1: Spann- oder Greifeinrichtung
- 2: Grundkörper
- 3: Befestigungsflansch
- 4: Bolzen
- 5: Stirnfläche
- 6: Umfangsfläche
- 7: Aufnahmebohrung
- 8: Führungsnut
- 9: Spannbacke
- 10: äußeres Abdeckelement
- 11: Hülse
- 12: inneres Abdeckelement
- 13: Einstecknut
- 14a: Durchgangsöffnung
- 14b: Gewindebohrung
- 15: Einsteckfeder
- 16: Aussparung
- 17: radialer Endbereich
- 18: Ausnehmung
- 19: Anlagefläche
- 20: Randfläche
- 21: Innenfläche
- 22: Außenfläche
- 23: Schraube
- 24: Durchgangsbohrung
- 25: Gewindebohrung
- 26: Dichtung
- 26a: gerades Dichtelement
- 26b: U-förmiges Dichtelement
- 27: Seitenwand
- 28: gerade Einsetznut
- 29: Vorsprung
- 30: Vertiefung
- 31: U-förmige Einsetznut
- 32: Randfläche
- X: Spannachse

## Patentansprüche

1. Spann- oder Greifeinrichtung (1) mit einem eine Spannachse (X) definierenden Grundkörper (2), der eine zentrale, zur vorderen Stirnfläche (5) des Grundkörpers (2) hin offene und den Grundkörper (2) insbesondere durchsetzende axiale Aufnahmebohrung (7) aufweist, wobei in der vorderen Stirnfläche (5) des Grundkörpers (2) mehrere Führungsnuten (8) zur Aufnahme von Spannbacken (9) ausgebildet sind, die sich radial zwischen der äußeren Umfangsfläche (6) des Grundkörpers (2) und der Aufnahmebohrung (7) erstrecken und in der Weise ausgebildet sind, dass jeweils eine Spannbacke (9) insbesondere von der Außenseite des Grundkörpers (2) her radial in die Führungsnuten (8) eingeschoben werden kann, wobei an dem Grundkörper (2) Verbindungsmittel vorgesehen sind, die an dem Grundkörper (2) äußere Abdeckelemente (10) lösbar fixieren, welche die Führungsnuten (8) an deren offenen Außenseiten zumindest teilweise verschließen, **dadurch gekennzeichnet, dass** die grundkörperseitigen Verbindungsmittel Steckverbindungsmittel aufweisen, die derart ausgebildet sind, dass die äußeren Abdeckelemente (10) mit ihnen unter Herstellung einer Steckverbindung, durch welche die äußeren Abdeckelemente (10) an dem Grundkörper (2) in radialer Richtung formschlüssig fixiert werden, von der Vorderseite oder der Rückseite des Grundkörpers (2) her in Eingriff bringbar sind und dass äußere Abdeckelemente (10) mit den grundkörperseitigen Steckverbindungsmitteln formschlüssig in Eingriff stehen und so an dem Grundköper (2) fixiert sind.

2. Spann- oder Greifeinrichtung (1) nach Anspruch 1, **dadurch gekennzeichnet, dass** die grundkörperseitigen Steckverbindungsmittel an dem Grundkörper (2) ausgebildete Einstecknuten (13) umfassen, in welche die äußeren Abdeckelemente (10) eingesteckt oder einsteckbar sind und die sich insbesondere U-förmig entlang des Umfangs der Führungsnuten (8) erstrecken, und/oder dass die grundkörperseitigen Steckverbindungsmittel an dem Grundkörper (2) ausgebildete Verbindungsstege umfassen, welche mit Abdeckelementen (10) in Eingriff stehen oder bringbar sind und die sich insbesondere U-förmig entlang des Umfangs der Führungsnuten (8) erstrecken.

3. Spann- oder Greifeinrichtung (1) nach einem der vorherigen Ansprüche, **dadurch gekennzeichnet, dass** die äußeren Abdeckelemente (10) zu den grundkörperseitigen Steckverbindungsmitteln korrespondierende Steckverbindungsmittel aufweisen.

4. Spann- oder Greifeinrichtung (1) nach den Ansprüchen 2 und 3, **dadurch gekennzeichnet, dass** die äußeren Abdeckelemente (10) zu den grundkörperseitigen Einstecknuten (13) korrespondierende und mit diesen in Eingriff stehende Einsteckfedern (15) als Steckverbindungsmittel aufweisen und/oder dass die Abdeckelemente (10) zu den grundköperseitigen Verbindungsstegen korrespondierende und mit diesen in Eingriff stehende Verbindungsnuten aufweisen, wobei insbesondere die Einsteckfedern (15)/die Verbindungsnuten der äußeren Abdeckelemente (10) korrespondierend zu den grundkörperseitigen Einstecknuten (13)/Verbindungsstegen U-förmig ausgebildet sind, so dass die Steckverbindungsmittel an dem Grundkörper (2) einerseits und an den äußeren Abdeckelementen (10) andererseits über ihre gesamte Länge in Eingriff stehen.

5. Spann- oder Greifeinrichtung (1) nach Anspruch 3 oder 4, **dadurch gekennzeichnet, dass** die äußeren Abdeckelemente (10) plattenförmig ausgebildet sind, wobei die zu den grundkörperseitigen Steckverbindungsmitteln korrespondierenden Steckverbindungsmittel insbesondere an oder in der äußeren Umfangsfläche der Abdeckelemente (10) vorgesehen sind.

6. Spann- oder Greifeinrichtung (1) nach einem der vorhergehenden Ansprüche, **dadurch gekennzeichnet, dass** jeder Führungsnut (8) eine in der Umfangsfläche (6) des Grundkörpers (2) ausgebildete, zu der vorderen Stirnfläche (5) des Grundkörpers (2) hin offene Ausnehmung (18) mit einer radialen Anlagefläche (19) und einer die radiale Anlagefläche (19) begrenzenden Randfläche (20) zugeordnet ist, in die ein äußeres Abdeckelement (10) einsteckbar oder eingesteckt ist, wobei insbesondere in den Randflächen (20) der Ausnehmungen (18) die grundkörperseitigen Steckverbindungsmittel ausgebildet sind.

7. Spann- oder Greifeinrichtung (1) nach einem der Ansprüche 3 bis 5 und nach Anspruch 6, **dadurch gekennzeichnet, dass** die äußeren Abdeckelemente (10) zu den Anlageflächen (19) der Ausnehmungen (18) korrespondierende Innenflächen (21) aufweisen, die mit den Anlageflächen (19) der Ausnehmungen (18) flächig in Kontakt kommen, wobei insbesondere die Anlageflächen (19) und die Innenflächen (21) eben ausgebildet sind und/oder dass der Grundkörper (2) im Wesentlichen zylinderförmig ausgebildet ist und die äußeren Abdeckelemente (10) zylindermantelförmige Außenflächen (22) aufweisen, die denselben Krümmungsradius wie die Umfangsfläche (6) des Grundkörpers (2) besitzen und mit der Umfangsfläche (6) des Grundkörpers (2) bündig abschließen.

8. Spann- oder Greifeinrichtung (1) nach einem der vorhergehenden Ansprüche, **dadurch gekennzeichnet, dass** die grundkörperseitigen Verbindungsmittel in dem Grundkörper (2) ausgebildete Gewindebohrungen (25) und zu den Gewindebohrungen (25) korrespondierende Schrauben (23) umfassen, mittels derer die äußeren Abdeckelemente (10) an dem Grundkörper (2) axial festlegbar oder festgelegt sind.

9. Spann- oder Greifeinrichtung (1) nach den Ansprüchen 7 und 8, **dadurch gekennzeichnet, dass** die Gewindebohrungen (25) in den Anlageflächen (19) der Ausnehmungen (18) ausgebildet sind.

10. Spann- oder Greifeinrichtung (1) mit einem einer Spannachse (X) definierenden Grundkörper (2), der eine zentrale, zur vorderen Stirnfläche (5) des Grundkörpers (2) hin offene und den Grundkörper (2) insbesondere durchsetzende axiale Aufnahmebohrung (7) aufweist, wobei in der vorderen Stirnfläche (5) des Grundkörpers (2) mehrere Führungsnuten (8) zur Aufnahme von Spannbacken (9) ausgebildet sind, die sich radial zwischen der äußeren Umfangsfläche (6) des Grundkörpers (2) und der Aufnahmebohrung (7) erstrecken und in der Weise ausgebildet sind, dass jeweils eine Spannbacke (9) insbesondere von der Außenseite des Grundkörpers (2) her radial in die Führungsnuten (8) eingeschoben werden kann, insbesondere nach einem der vorhergehenden Ansprüche, wobei die Führungsnuten (8) innenseitig durch innere Abdeckelemente (12) zumindest teilweise verschlossen sind und in die Führungsnuten (8) Spannbacken (9) eingeschoben sind, und wobei an dem Grundkörper (2) Verbindungsmittel vorgesehen sind, die an dem Grundkörper (2) innere Abdeckelemente (12) lösbar fixieren, **dadurch gekennzeichnet, dass** an der Vorderseite der inneren Abdeckelemente (12) jeweils eine Aussparung (16) derart ausgebildet ist, dass sie von einem radialen Endbereich (17) der Spannbacken (9) durchgriffen wird oder werden kann und dass zwischen den Spannbacken (9) einerseits und dem Grundkörper (2) und/oder den inneren Abdeckelementen (12) andererseits gebildete Spalte gegen ein Austreten von Schmiermittel aus den Führungsnuten (8) und/oder gegen ein Eindringen von Fremdkörpern in die Führungsnuten (8) abgedichtet sind, und dass die inneren Abdeckelemente (12) in ihren die Aussparungen (16) begrenzenden Randflächen (32) eine U-förmige Einsetznut (31) aufweisen, in die - insbesondere U-förmige - Dichtungselemente oder Dichtungsabschnitte (26b) eingesetzt sind, um an der Innenseite der Führungsnuten (8) zwischen der Spannbacken (9) einerseits und den inneren Abdeckelementen (12) andererseits gebildete Spalte abzudichten.

11. Spann- und Greifeinrichtung (1) nach Anspruch 10, **dadurch gekennzeichnet, dass** die grundkörperseitigen Verbindungsmittel Steckverbindungsmittel aufweisen, die derart ausgebildet sind, dass die inneren Abdeckelemente (12) unter Herstellung einer Steckverbindung von der Rückseite des Grundkörpers (2) her mit ihnen in Eingriff bringbar sind, um sie an dem Grundkörper (2) in radialer Richtung formschlüssig zu fixieren und/oder dass die inneren Abdeckelemente (12) an einer Hülse gehalten oder ausgebildet sind, welche in die Aufnahmebohrung (7) des Grundkörpers (2) insbesondere von dessen Rückseite her eingeschoben und an dem Grundkörper (2) fixiert ist.

12. Spann- oder Greifeinrichtung (1) nach einem der vorhergehenden Ansprüche, wobei Spannbacken (9) in die Führungsnuten (8) eingeschoben sind, **dadurch gekennzeichnet, dass** an der Vorderseite der äußeren Abdeckelemente (10) jeweils eine Aussparung (16) derart ausgebildet ist, dass sie von einem radialen Endbereich (17) der Spannbacke (9) durchgriffen wird oder werden kann und/oder dass zwischen den Spannbacken (9) einerseits und dem Grundkörper (2) und/oder den äußeren Abdeckelementen (10) andererseits gebildete Spalte gegen ein Austreten von Schmiermittel aus den Führungsnuten (8) und/oder gegen ein Eindringen von Fremdkörpern in die Führungsnuten (8) abgedichtet sind.

13. Spann- oder Greifeinrichtung (1) nach Anspruch 12, **dadurch gekennzeichnet, dass** die äußeren Abdeckelemente (10) in ihren die Aussparungen (16) begrenzenden Randflächen (32) eine U-förmige Einsetznut (31) aufweisen, in die - insbesondere U-förmige - Dichtungselemente oder Dichtungsabschnitte (26b) einsetzbar oder eingesetzt sind, um an der Außenseite und/oder an der Innenseite der Führungsnut (8) zwischen der Spannbacke (9) einerseits und den äußeren Abdeckelemente (10) andererseits gebildete Spalte abzudichten.

14. Spann- oder Greifeinrichtung (1) nach Anspruch 13, **dadurch gekennzeichnet, dass** in gegenüberliegenden Seitenwänden (27) der Führungsnuten (8) gerade Einsetznuten (28) ausgebildet sind, die sich in der Längsrichtung der Führungsnuten (8) erstrecken, wobei in die geraden Einsetznuten (28) gerade Dichtungselemente oder Dichtungsabschnitte (26a) eingesetzt oder einsetzbar sind, um an der Vorderseite der Spann- oder Greifeinrichtung (1) zwischen der Spannbacke (9) und dem Grundkörper (2) gebildete Spalte abzudichten, wobei insbesondere am Grund der geraden Einsetznuten (28) Vertiefungen (30) und an den geraden Dichtungselementen/Dichtungsabschnitten (26a) zu den Vertiefungen (30) korrespondierende und in diese eingreifende Vorsprünge (29) ausgebildet sind und wobei Dichtungen (26) mit zwei sich gegenüberliegenden geraden Dichtungsabschnitten (26a) und zwei U-förmigen Dichtungsabschnitte (26b), welche zwischen den geraden Dichtungsabschnitten (26a) angeordnet sind und deren gegenüberliegende freie Enden miteinander verbinden, zur Abdichtung der Führungsnuten vorgesehen sind, wobei die U-förmigen Dichtungsabschnitte (26b) gegenüber den geraden Dichtungsabschnitten (26a) zu derselben Seiten hin insbesondere senkrecht abgewinkelt sind, und wobei die geraden Dichtungsabschnitte (26a) in die geraden Einsetznuten (28) und die U-förmigen Dichtungsabschnitte (26b) in die U-förmigen Einsetznuten (31) der Abdeckelemente (10, 12) eingesetzt sind, wobei insbesondere die Übergangsbereiche zwischen den geraden Dichtungsabschnitte (26a) und den U-förmigen Dichtungsabschnitte (26b) abgerundet sind.

## Claims

1. Clamping or gripping device (1) with a base body (2) defining a clamping axis (X), which has a central axial receiving bore (7) which is open towards the front end face (5) of the base body (2) and passes in particular through the base body (2), wherein a plurality of guide grooves (8) for receiving clamping jaws (9) are formed in the front end face (5) of the base body (2), which extend radially between the outer circumferential surface (6) of the base body (2) and the receiving bore (7) and are designed in such a way that in each case a clamping jaw (9) can be pushed radially into the guide grooves (8), in particular from the outside of the base body (2), connecting means being provided on the base body (2), which releasably fix outer cover elements (10) to the base body (2), which cover elements (10) at least partially close the guide grooves (8) on their open outer sides, **characterized in that** the connecting means on the base body side have plug-in connecting means which are designed in such a way that the outer cover elements (10) can be brought into engagement with them producing a plug-in connection, by means of which the outer cover elements (10) are fixed to the base body (2) in a form-fitting manner in the radial direction, from the front side or the rear side of the base body (2), and **in that** outer cover elements (10) are engaged with the base-body-side plug-in connection means in a form-fitting manner and are thus fixed to the base body (2)

2. Clamping or gripping device (1) according to claim 1, **characterized in that** the plug-in connecting means on the basic body side comprise plug-in grooves (13) which are formed on the basic body (2) and into which the outer cover elements (10) are plugged or can be plugged and which extend in particular in a U-shape along the circumference of the guide grooves (8), and/or **in that** the plug-in connecting means on the base body side comprise connecting webs which are formed on the base body (2) and which engage or can be engaged with cover elements (10) and which extend in particular in a U-shape along the circumference of the guide grooves (8).

3. Clamping or gripping device (1) according to one of the previous claims, **characterized in that** the outer cover elements (10) have plug-in connecting means corresponding to the plug-in connecting means on the base body side.

4. Clamping or gripping device (1) according to claims 2 and 3, **characterized in that** the outer cover elements (10) have plug-in connecting means in the form of plug-in springs (15) corresponding to and engaging with the plug-in grooves (13) on the basic body side, and/or **in that** the cover elements (10) have plug-in connecting means in the form of plug-in grooves corresponding to and engaging with the connecting webs on the basic body side, wherein in particular the insertion springs (15)/the connecting grooves of the outer cover elements (10) are of U-shaped design corresponding to the insertion grooves (13)/connecting webs on the base body side, so that the plug-in connecting means on the base body (2) on the one hand and on the outer cover elements (10) on the other hand are in engagement over their entire length.

5. Clamping or gripping device (1) according to claim 3 or 4, **characterized in that** the outer cover elements (10) are plate-shaped, the plug-in connecting means corresponding to the base body-side plug-in connecting means being provided in particular on or in the outer circumferential surface of the cover elements (10).

6. Clamping or gripping device (1) according to one of the preceding claims, **characterized in that** each guide groove (8) has assigned thereto a recess (18) which is formed in the circumferential surface (6) of the base body (2), is open towards the front end face (5) of the base body (2) and has a radial contact surface (19) and an edge surface (20) bounding the radial contact surface (19), into which an outer cover element (10) can be plugged or inserted, the plug-in connecting means on the base body side being formed in particular in the edge surfaces (20) of the recesses (18).

7. Clamping or gripping device (1) according to one of claims 3 to 5 and according to claim 6, **characterized in that** the outer cover elements (10) have inner surfaces (21) corresponding to the contact surfaces (19) of the recesses (18), which inner surfaces (21) come into surface contact with the contact surfaces (19) of the recesses (18), wherein in particular the contact surfaces (19) and the inner surfaces (21) are flat and/or **in that** the base body (2) is substantially cylindrical and the outer cover elements (10) have outer surfaces (22) in the shape of a cylinder jacket which have the same radius of curvature as the circumferential surface (6) of the base body (2) and terminate flush with the circumferential surface (6) of the base body (2).

8. Clamping or gripping device (1) according to one of the preceding claims, **characterized in that** the connecting means on the base body side comprise threaded bores (25) formed in the base body (2) and screws (23) corresponding to the threaded bores (25), by means of which the outer cover elements (10) can be axially fixed or secured to the base body (2).

9. Clamping or gripping device (1) according to claims 7 and 8, **characterized in that** the threaded bores (25) are formed in the contact surfaces (19) of the recesses (18).

10. Clamping or gripping device (1) with a base body (2) defining a clamping axis (X), which has a central axial receiving bore (7) open towards the front end face (5) of the base body (2) and passing in particular through the base body (2), wherein a plurality of guide grooves (8) for receiving clamping jaws (9) are formed in the front end face (5) of the base body (2), which guide grooves (8) extend radially between the outer circumferential face (6) of the base body (2) and the receiving bore (7) and are formed in such a manner that in each case one clamping jaw (9) can be pushed radially into the guide grooves (8), in particular from the outside of the base body (2), in particular according to one of the preceding claims, wherein the guide grooves (8) are at least partially closed on the inside by inner cover elements (12) and clamping jaws (9) are pushed into the guide grooves (8), and wherein connecting means are provided on the base body (2), which releasably fix inner cover elements (12) to the base body (2), **characterized in that** a recess (16) is formed on the front side of each of the inner cover elements (12) in such a manner that it is or can be penetrated by a radial end region (17) of the clamping jaws (9), and that gaps formed between the clamping jaws (9) on the one hand and the base body (2) and/or the inner cover elements (12) on the other hand are sealed against lubricant escaping from the guide grooves (8) and/or against foreign bodies penetrating into the guide grooves (8), and **in that** the inner cover elements (12) have in their edge surfaces (32) bounding the recesses (16) a U-shaped insertion groove (31) into which - in particular U-shaped - sealing elements or sealing sections (26b) are inserted in order to seal gaps formed on the inside of the guide grooves (8) between the clamping jaw (9) on the one hand and the inner cover elements (12) on the other hand.

11. Clamping and gripping device (1) according to claim 10, **characterized in that** the connecting means on the base body side have plug-in connecting means which are designed in such a way that the inner cover elements (12) can be brought into engagement with them from the rear side of the base body (2) while establishing a plug-in connection, in order to fix them to the base body (2) in a form-fitting manner in the radial direction and/or **in that** the inner cover elements (12) are held or formed on a sleeve which is inserted into the receiving bore (7) of the base body (2), in particular from the rear side thereof, and is fixed to the base body (2).

12. Clamping or gripping device (1) according to one of the preceding claims, wherein clamping jaws (9) are inserted into the guide grooves (8), **characterized in that** a recess (16) is formed on the front side of each of the outer cover elements (10) in such a way that it is or can be penetrated by a radial end region (17) of the clamping jaw (9) and/or that gaps formed between the clamping jaws (9) on the one hand and the base body (2) and/or the outer cover elements (10) on the other hand are sealed against lubricant escaping from the guide grooves (8) and/or against foreign bodies penetrating into the guide grooves (8).

13. Clamping or gripping device (1) according to claim 12, **characterized in that** the outer cover elements (10) have in their edge surfaces (32) delimiting the recesses (16) a U-shaped insertion groove (31) into which - in particular U-shaped - sealing elements or sealing sections (26b) can be inserted or are inserted in order to seal gaps formed on the outside and/or on the inside of the guide groove (8) between the clamping jaw (9) on the one hand and the outer cover elements (10) on the other hand.

14. Clamping or gripping device (1) according to claim 13, **characterized in that** straight insertion grooves (28) are formed in opposite side walls (27) of the guide grooves (8) and extend in the longitudinal direction of the guide grooves (8), straight sealing elements or sealing sections (26a) being inserted or insertable into the straight insertion grooves (28) in order to seal gaps formed at the front side of the clamping or gripping device (1) between the clamping jaw (9) and the base body (2), wherein recesses (30) are formed in particular at the bottom of the straight insertion grooves (28) and projections (29) corresponding to and engaging in the recesses (30) are formed on the straight sealing elements/sealing sections (26a), and wherein seals (26) with two opposing straight sealing sections (26a) and two U-shaped sealing sections (26b), which are arranged between the straight seal portions (26a) and connect their opposite free ends to each other, are provided for sealing the guide grooves, wherein the U-shaped seal portions (26b) are angled in particular perpendicularly with respect to the straight seal portions (26a) towards the same sides, and wherein the straight sealing portions (26a) are inserted into the straight insertion grooves (28) and the U-shaped sealing portions (26b) are inserted into the U-shaped insertion grooves (31) of the cover elements (10, 12), wherein in particular the transition regions between the straight sealing portions (26a) and the U-shaped sealing portions (26b) are rounded.

## Revendications

1. Dispositif de serrage ou de préhension (1) avec un corps de base (2) définissant un axe de serrage (X), qui présente un alésage de réception (7) axial central, ouvert vers la face frontale avant (5) du corps de base (2) et traversant en particulier le corps de base (2), plusieurs rainures de guidage (8) étant réalisées dans la face frontale avant (5) du corps de base (2) pour recevoir des mâchoires de serrage (9), qui s'étendent radialement entre la surface périphérique extérieure (6) du corps de base (2) et l'alésage de réception (7) et qui sont conçues de telle sorte que respectivement une mâchoire de serrage (9) peut être insérée radialement dans les rainures de guidage (8), en particulier à partir du côté extérieur du corps de base (2), des moyens de liaison étant prévus sur le corps de base (2), qui fixent de manière amovible sur le corps de base (2) des éléments de recouvrement extérieurs (10) qui ferment au moins partiellement les rainures de guidage (8) sur leurs côtés extérieurs ouverts, **caractérisé en ce que** les moyens de liaison côté corps de base présentent des moyens de liaison par enfichage qui sont conçus de telle sorte que les éléments de recouvrement extérieurs (10) sont reliés à eux en réalisant une liaison par enfichage, par laquelle les éléments de recouvrement extérieurs (10) sont fixés par complémentarité de forme sur le corps de base (2) dans la direction radiale, et que les éléments de recouvrement extérieurs (10) sont en prise par complémentarité de forme avec les moyens de liaison enfichables côté corps de base et sont ainsi fixés sur le corps de base (2)

2. Dispositif de serrage ou de préhension (1) selon la revendication 1, **caractérisé en ce que** les moyens de liaison par enfichage côté corps de base comprennent des rainures d'enfichage (13) formées sur le corps de base (2), dans lesquelles les éléments de recouvrement extérieurs (10) sont enfichés ou peuvent être enfichés et qui s'étendent notamment en forme de U le long de la périphérie des rainures de guidage (8), et/ou **en ce que** les moyens de liaison par enfichage côté corps de base comprennent des barrettes de liaison formées sur le corps de base (2), qui sont ou peuvent être mises en prise avec des éléments de recouvrement (10) et qui s'étendent en particulier en forme de U le long de la périphérie des rainures de guidage (8).

3. Dispositif de serrage ou de préhension (1) selon l'une des revendications précédentes, **caractérisé en ce que** les éléments de recouvrement extérieurs (10) présentent des moyens de connexion enfichables correspondant aux moyens de connexion enfichables côté corps de base.

4. Dispositif de serrage ou de préhension (1) selon les revendications 2 et 3, **caractérisé en ce que** les éléments de recouvrement extérieurs (10) présentent des ressorts d'emboîtement (15) correspondant aux rainures d'emboîtement (13) côté corps de base et s'engageant avec celles-ci en tant que moyens de liaison par emboîtement et/ou **en ce que** les éléments de recouvrement (10) présentent des rainures de liaison correspondant aux barrettes de liaison côté corps de base et s'engageant avec celles-ci, les ressorts d'emboîtement (15)/les rainures de liaison des éléments de recouvrement extérieurs (10) étant en particulier réalisés en forme de U en correspondance avec les rainures d'emboîtement (13)/les nervures de liaison du côté du corps de base, de sorte que les moyens de liaison par emboîtement sur le corps de base (2) d'une part et sur les éléments de recouvrement extérieurs (10) d'autre part sont en prise sur toute leur longueur.

5. Dispositif de serrage ou de préhension (1) selon la revendication 3 ou 4, **caractérisé en ce que** les éléments de recouvrement extérieurs (10) sont réalisés en forme de plaque, les moyens de connexion enfichables correspondant aux moyens de connexion enfichables côté corps de base étant prévus en particulier sur ou dans la surface périphérique extérieure des éléments de recouvrement (10).

6. Dispositif de serrage ou de préhension (1) selon l'une des revendications précédentes, **caractérisé en ce qu'**à chaque rainure de guidage (8) est associé un évidement (18) formé dans la surface périphérique (6) du corps de base (2) et ouvert vers la surface frontale avant (5) du corps de base (2), avec une surface d'appui radiale (19) et une surface de bord (20) délimitant la surface d'appui radiale (19), dans laquelle un élément de recouvrement extérieur (10) peut être enfiché ou est enfiché, les moyens de liaison par enfichage côté corps de base étant notamment formés dans les surfaces de bord (20) des évidements (18).

7. Dispositif de serrage ou de préhension (1) selon l'une des revendications 3 à 5 et selon la revendication 6, **caractérisé en ce que** les éléments de recouvrement extérieurs (10) présentent des surfaces intérieures (21) correspondant aux surfaces d'appui (19) des évidements (18), qui viennent en contact à plat avec les surfaces d'appui (19) des évidements (18), les surfaces d'appui (19) et les surfaces intérieures (21) étant notamment planes et/ou **en ce que** le corps de base (2) est essentiellement cylindrique et les éléments de recouvrement extérieurs (10) présentent des surfaces extérieures (22) en forme d'enveloppe cylindrique, qui possèdent le même rayon de courbure que la surface périphérique (6) du corps de base (2) et se terminent à fleur de la surface périphérique (6) du corps de base (2).

8. Dispositif de serrage ou de préhension (1) selon l'une des revendications précédentes, **caractérisé en ce que** les moyens de liaison côté corps de base comprennent des trous taraudés (25) formés dans le corps de base (2) et des vis (23) correspondant aux trous taraudés (25), au moyen desquelles les éléments de recouvrement extérieurs (10) peuvent être fixés ou sont fixés axialement sur le corps de base (2).

9. Dispositif de serrage ou de préhension (1) selon les revendications 7 et 8, **caractérisé en ce que** les trous taraudés (25) sont réalisés dans les surfaces d'appui (19) des évidements (18).

10. Dispositif de serrage ou de préhension (1) avec un corps de base (2) définissant un axe de serrage (X), qui présente un alésage de réception (7) axial central, ouvert vers la face frontale avant (5) du corps de base (2) et traversant en particulier le corps de base (2), plusieurs rainures de guidage (8) destinées à recevoir des mâchoires de serrage (9) étant formées dans la face frontale avant (5) du corps de base (2), lesquelles s'étendent radialement entre la surface périphérique extérieure (6) du corps de base (2) et l'alésage de réception (7) et sont réalisées de telle manière, qu'une mâchoire de serrage (9) respective peut être insérée radialement dans les rainures de guidage (8), en particulier depuis le côté extérieur du corps de base (2), en particulier selon l'une des revendications précédentes, les rainures de guidage (8) étant fermées au moins partiellement côté intérieur par des éléments de recouvrement intérieurs (12) et étant insérées dans les rainures de guidage (8) des mâchoires de serrage (9), et des moyens de liaison étant prévus sur le corps de base (2), qui fixent de manière amovible des éléments de recouvrement intérieurs (12) sur le corps de base (2), **caractérisés en ce que** sur la face avant des éléments de recouvrement intérieurs (12), un évidement (16) est respectivement réalisé de telle sorte, qu'il est ou peut être traversé par une zone d'extrémité radiale (17) des mâchoires de serrage (9) et que des fentes formées entre les mâchoires de serrage (9) d'une part et le corps de base (2) et/ou les éléments de recouvrement intérieurs (12) d'autre part sont rendues étanches contre une fuite de lubrifiant hors des rainures de guidage (8) et/ou contre une pénétration de corps étrangers dans les rainures de guidage (8), et **en ce que** les éléments de recouvrement intérieurs (12) présentent, dans leurs surfaces de bord (32) délimitant les évidements (16), une rainure d'insertion (31) en forme de U, dans laquelle sont insérés des éléments d'étanchéité ou des sections d'étanchéité (26b) - en particulier en forme de U - afin de rendre étanches les fentes formées sur le côté intérieur des rainures de guidage (8) entre la mâchoire de serrage (9) d'une part et les éléments de recouvrement intérieurs (12) d'autre part.

11. Dispositif de serrage et de préhension (1) selon la revendication 10, **caractérisé en ce que** les moyens de liaison côté corps de base présentent des moyens de liaison par enfichage qui sont conçus de telle sorte que les éléments de recouvrement intérieurs (12) peuvent être mis en prise avec eux en réalisant une liaison par enfichage depuis l'arrière du corps de base (2), pour les fixer par complémentarité de forme sur le corps de base (2) dans la direction radiale et/ou **en ce que** les éléments de recouvrement intérieurs (12) sont maintenus ou formés sur une douille qui est insérée dans l'alésage de réception (7) du corps de base (2), en particulier à partir de sa face arrière, et est fixée sur le corps de base (2).

12. Dispositif de serrage ou de préhension (1) selon l'une des revendications précédentes, dans lequel des mâchoires de serrage (9) sont insérées dans les rainures de guidage (8), **caractérisé en ce qu'**un évidement (16) est formé sur la face avant de chacun des éléments de recouvrement extérieurs (10) de telle sorte, qu'il est ou peut être traversé par une zone d'extrémité radiale (17) de la mâchoire de serrage (9) et/ou que des fentes formées entre les mâchoires de serrage (9) d'une part et le corps de base (2) et/ou les éléments de recouvrement extérieurs (10) d'autre part sont rendues étanches contre une fuite de lubrifiant hors des rainures de guidage (8) et/ou contre une pénétration de corps étrangers dans les rainures de guidage (8).

13. Dispositif de serrage ou de préhension (1) selon la revendication 12, **caractérisé en ce que** les éléments de recouvrement extérieurs (10) présentent, dans leurs surfaces de bord (32) délimitant les évidements (16), une rainure d'insertion (31) en forme de U, dans laquelle des éléments d'étanchéité ou des sections d'étanchéité (26b) - en particulier en forme de U - peuvent être insérés ou sont insérés, afin de rendre étanches les fentes formées sur le côté extérieur et/ou sur le côté intérieur de la rainure de guidage (8) entre la mâchoire de serrage (9) d'une part et les éléments de recouvrement extérieurs (10) d'autre part.

14. Dispositif de serrage ou de préhension (1) selon la revendication 13, **caractérisé en ce que** des rainures d'insertion droites (28) sont formées dans des parois latérales opposées (27) des rainures de guidage (8), lesquelles s'étendent dans la direction longitudinale des rainures de guidage (8), des éléments d'étanchéité ou des sections d'étanchéité droites (26a) étant insérés ou pouvant être insérés dans les rainures d'insertion droites (28) afin d'étanchéifier des fentes formées sur le côté avant du dispositif de serrage ou de préhension (1) entre la mâchoire de serrage (9) et le corps de base (2), des renfoncements (30) étant formés en particulier au fond des rainures d'insertion droites (28) et des saillies (29) correspondant aux renfoncements (30) et s'engageant dans ceux-ci étant formées sur les éléments d'étanchéité/sections d'étanchéité droites (26a), et des joints (26) comportant deux sections d'étanchéité droites (26a) opposées et deux sections d'étanchéité en forme de U (26b), qui sont disposées entre les sections d'étanchéité droites (26a) et relient entre elles leurs extrémités libres opposées, sont prévues pour assurer l'étanchéité des rainures de guidage, les sections d'étanchéité en forme de U (26b) étant coudées en particulier perpendiculairement par rapport aux sections d'étanchéité droites (26a) vers les mêmes côtés, et dans lequel les sections d'étanchéité droites (26a) sont insérées dans les rainures d'insertion droites (28) et les sections d'étanchéité en forme de U (26b) sont insérées dans les rainures d'insertion en forme de U (31) des éléments de recouvrement (10, 12), les zones de transition entre les sections d'étanchéité droites (26a) et les sections d'étanchéité en forme de U (26b) étant notamment arrondies.
